# EUROPÄISCHE PATENTSCHRIFT

(11) **EP 0 756 681 B1**
(45) Veröffentlichungstag und Bekanntmachung des Hinweises auf die Patenterteilung: **12.07.2000**
(21) Anmeldenummer: 95915779.3
(22) Anmeldetag: 18.04.1995
(51) Int. Cl.: F16K 5/06

(54) **KUGELHAHN MIT EINEM MIT KUNSTSTOFF AUSGEKLEIDETEN KUGELHAHNEINSATZ**
BALL VALVE HAVING A BALL VALVE INSERT LINED WITH PLASTICS MATERIAL
ROBINET A TOURNANT SPHERIQUE A INSERTION REVETUE DE MATIERE PLASTIQUE

(30) Priorität: 21.04.1994 DE 4413857; 30.11.1994 DE 4442600; 20.03.1995 DE 19510087
(43) Veröffentlichungstag der Anmeldung: 05.02.1997
(73) Patentinhaber: Nemetz, Josef, D-65189 Wiesbaden (DE)
(72) Erfinder: Nemetz, Josef, D-65189 Wiesbaden (DE)
(74) Vertreter: Quermann, Helmut, Dipl.-Ing.
(86) Internationale Anmeldenummer: DE9500508
(87) Internationale Veröffentlichungsnummer: WO9529357

(56) Entgegenhaltungen:
- EP-A- 0 156 936
- EP-A- 0 199 360
- DE-A- 4 235 913
- FR-A- 1 391 418
- FR-A- 1 519 806

## Beschreibung

Die Erfindung betrifft einen Kugelhahn mit einem auswechselbaren Kugelhahneinsatz gemäß dem Oberbegriff des Patentanspruches 1.

Ein derartiger Kugelhahn ist aus der DE-A-42 35 913 bekannt. Der auswechselbare Kugelhahneinsatz ist bei diesem Kugelhahn senkrecht zur Durchflußrichtung angeordnet und es wird der Kugelhahneinsatz senkrecht zur Durchflußrichtung in das Gehäuse eingesetzt. Aus dieser Montagerichtung ergeben sich jedoch große Schwierigkeiten bezüglich der Abdichtung des Kugelhahneinsatzes gegenüber dem Gehäuse. Auch ist die Ausführung in Verbindung mit einem Gehäuse, welches mit Kunststoff ausgekleidet ist, sehr aufwendig.

Aufgabe der vorliegenden Erfindung ist es, einen gemäß dem Oberbegriff des Patentanspruches 1 gestalteten Kugelhahn so weiter zu bilden, daß eine einwandfreie Dichtheit zwischen Gehäuse und Kugelhahneinsatz gegeben ist, sowie die Ausführung eines solchen Kugelhahns mit einem mit Kunststoff ausgekleideten Gehäuse wirtschaftlich gestaltet werden kann.

Diese Aufgabe wird durch einen Kugelhahn gemäß den Merkmalen des Patentanspruches 1 gelöst.

Ein aus der EP-A-0 199 360 bekannter Kugelhahn unterscheidet sich von dem erfindungsgemäßen Kugelhahn - so weit mit der vorliegenden Erfindung vergleichbar - bereits dadurch, daß ein auswechselbarer Kugelhahneinsatz, der ein in einer Kunststoffauskleidung drehbares Absperrelement beinhaltet, nicht vorhanden ist. Abgesehen hiervon weist der Kugelhahn keinen separaten Gehäusekörper auf, der die Funktion des Gehäusekörpers bei dem auswechselbaren Kugelhahneinsatz gemäß der vorliegenden Erfindung besitzt. Bei diesem Stand der Technik wird nach der Montage des Absperrelementes im Gehäuse, wobei zusätzlich ein Ringscheibenelement montiert wird, die Kunststoffauskleidung des Kugelhahns in einem Spritz- oder Preßverfahren vorgenommen, wobei die Teile samt Gehäuse zu einer Einheit mit der Auskleidung verbunden werden. Bei diesem Kugelhahn sind die Teile nicht ohne weiteres demontierbar. Es muß vielmehr im Falle einer Reparatur die Auskleidung ausgeschmolzen werden. Hierbei einher geht ein erheblicher Arbeitsaufwand, nicht zuletzt vor dem Hintergrund, daß sowohl bei der Herstellung als auch im Falle einer Reparatur die gesamte Armatur erwärmt werden muß.

Gemäß der vorliegenden Erfindung wird ein von Flansch zu Flansch durchgehend ausgekleideter Kugelhahneinsatz mit in der Auskleidung drehbar und an ihr anliegend eingeschlossener Kugel mit Schaltwelle als Kugelhahneinsatz in ein ein- oder mehrteiliges Gehäuse eingesetzt und flanschseitig verspannt. Durch diese axiale, in Durchflußrichtung der Armatur vorgesehene Verspannung können hohe Spannkräfte aufgebracht und somit eine sichere Abdichtung zwischen den Flanschen des Kugelhahneinsatzes und den Gegenflanschen oder den gehäusemäßigen Dichtflächen erzielt werden. Die Abdichtung zur Atmosphäre hin erfolgt an der Kugel und/oder an der Schaltwelle. Um eine sichere Funktion beim Schaltvorgang zu erreichen, ist die Auskleidung zweckmäßig in dem Gehäusekörper verankert.

Der Gehäusekörper des Kugelhahneinsatzes kann aus Kunststoff auf die bereits die Kugel mit Schaltwelle umgebende Auskleidung gespritzt oder gepreßt sein, oder er kann aus Metall vorgesehen werden. Insbesondere bei der Ausführung in Metall kann der Gehäusekörper zweiteilig ausgeführt sein, wobei sich eine mittige Teilung, sei es horizontal oder vertikal günstig gestaltet, da über die Auskleidung, die die Kugel mit Schaltwelle einschließt, die Hälften von dem Gehäusekörper zu einer Einheit verbunden werden. Darüber hinaus erhält der Kugelhahneinsatz durch die Anordnung in einem Gehäuse die nötige Druckfestigkeit.

Zwischen dem Gehäusekörper und der Auskleidung sind elastische Einlagen, zumindest im Bereich um den Zu- und Abgang des Durchganges von der Kugel gelegen, angeordnet. Diese elastische Einlagen können sich auch über die Flanschseiten, über einen Teil des Schaltwellenbereiches und ebenso über den restlichen Kugelbereich, außer an den Verankerungsstellen, zwischen Auskleidung und Gehäusekörper erstrecken oder als getrennte Teile an diesen Stellen angeordnet sein.

Dadurch, daß der Kugelhahneinsatz von Flansch zu Flansch eine nahtlos durchgehende Kunststoffauskleidung, insbesondere eine solche aus Fluorkunststoff wie z.B. PFA, PTFE, FEP oder ähnlich aufweist, liegt der Gehäusekörper und die der Auskleidung nachgeschalteten Teile außerhalb des Mediumbereiches. Es ist daher nicht erforderlich für den Gehäusekörper und den weiteren nachgeschalteten Teilen hochwertige Werkstoffe zu verwenden.

Das Gehäuse, in welches der Kugelhahneinsatz eingesetzt wird, besteht vorteilhaft aus einem metallischen Werkstoff. Das Gehäuse kann aber auch in Kunststoff oder in Kunststoff mit metallischer Verstärkung ausgeführt sein. Da bei einer Kompaktarmatur das Gehäuse außerhalb des Mediumbereiches liegt, ist ein gegenüber dem Medium beständiger Werkstoff für das Gehäuse nicht erforderlich. Dadurch stellt die Gehäuseausführung für eine Kompaktarmatur in Verbindung mit dem auswechselbaren Kugelhahneinsatz aufgrund der von Flansch zu Flansch nahtlos durchgehenden Auskleidung eine sehr wirtschaftliche Lösung für eine mit Kunststoff ausgekleidete Armatur dar. Der Kugelhahneinsatz wird in das Gehäuse axial in Durchflußrichtung eingesetzt und entweder in einem geteilten Gehäuse zwischen zwei Gehäusehälften oder Gehäuseteilen an Schultern verspannt, oder in einem einteiligen Gehäuse z.B. zwischen zwei Gewinderinge oder mit einem Gewindering gegen eine Gehäuseschulter axial verspannt. Die Schaltwelle von der Kugel reicht entweder bis außerhalb des Gehäuses oder sie reicht in etwa bis zum Außendurchmesser des Gehäusekörpers, wobei die Schaltwelle eine Möglichkeit zur formschlüssigen Verbindung mit der im Gehäuse angeordneten Schaltwellenverlängerung bietet.

Bei der Ausführung des Kugelhahns mit Kugelhahneinsatz in einem ein- oder mehrteiligen Gehäuse in langer Bauweise muß entweder der Gehäusewerkstoff gegenüber dem Medium resistent sein oder das Gehäuse bzw. die dem Medium gegenüber ausgesetzten Gehäusebereiche müssen ebenfalls mit einem Kunststoff oder mit einem anderen gegenüber dem Medium beständigen Werkstoff, ausgekleidet sein. Die Schaltwelle kann bis über das Gehäuse hinausragen oder im Bereich des Kugelhahneinsatzes gekuppelt ausgeführt sein.

Die Kugel mit Schaltwelle ist zweckmäßig einteilig ausgeführt. Sie kann aber auch zweiteilig und formschlüssig verbunden ausgeführt sein. Der Durchgang der Kugel ist an keine bestimmte Querschnittsform gebunden. Er kann rund, dreiecksförmig oder je nach Bedarf auch anders gestaltet sein. Auch kann die Kugel durchgangsmäßig mit einem Drei- oder Mehrwegedurchgang versehen sein. Die Kugel mit Schaltwelle ist an keinen bestimmten Werkstoff gebunden. Sie kann aus einem metallischen Werkstoff z.B. aus Edelstahl, Hastelloy oder ähnlich vorgesehen werden, oder aus Keramik oder aus einem sonstigen geeigneten Werkstoff bestehen. Ebenso kann sie aus einem metallischen Werkstoff der mit Kunststoff ummantelt ist vorgesehen werden, sofern die Kunststoffummantelung für die nachfolgende Auskleidung, die die Kugel und z.T. auch die Schaltwelle umschließt, temperaturmäßig geeignet ist.

Der Kugelhahn ist an keine bestimmte Anschlußart gebunden. Er kann sowohl als Kompaktarmatur wie auch in langer Bauweise mit Flanschanschluß vorgesehen werden. Die zweiteilige Gehäuseausführung eignet sich auch anschlußmäßig für Klebemuffen, Anschweißenden, für Gewindeanschluß oder sonstige Anschlußarten. Der Kugelhahn kann auch als Mehrwegehahn ausgeführt werden.

Weitere Merkmale der Erfindung sind in der Beschreibung der Figuren und in den Unteransprüchen dargestellt, wobei bemerkt wird, daß alle Einzelmerkmale und Kombinationen der Einzelmerkmale weitere Verbesserungen der aufgezeigten Lösung sind.

In den Figuren 1 bis 5 ist die Erfindung an Ausführungsformen beispielweise dargestellt, ohne auf diese Ausführungsformen beschränkt zu sein.
- Figur 1: zeigt ein Ausführungsbeispiel für einen Kugelhahn mit Kugelhahneinsatz gemäß der Erfindung mit einem geteilten Gehäuse in langer Bauweise;
- Figur 2: zeigt ein Ausführungsbeispiel als Kompaktarmatur in einem geteilten Gehäuse;
- Figur 3: zeigt ein Ausführungsbeispiel als Kompaktarmatur in einem einteiligen Gehäuse und die
- Figuren 4 und 5: zeigen weitere Ausführungsbeispiele für einteilige Gehäuse.

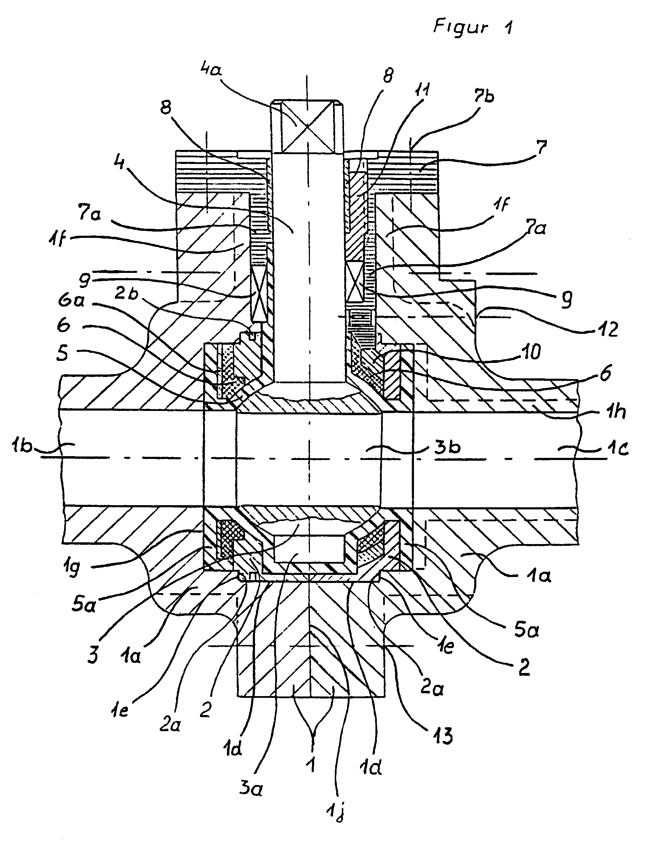

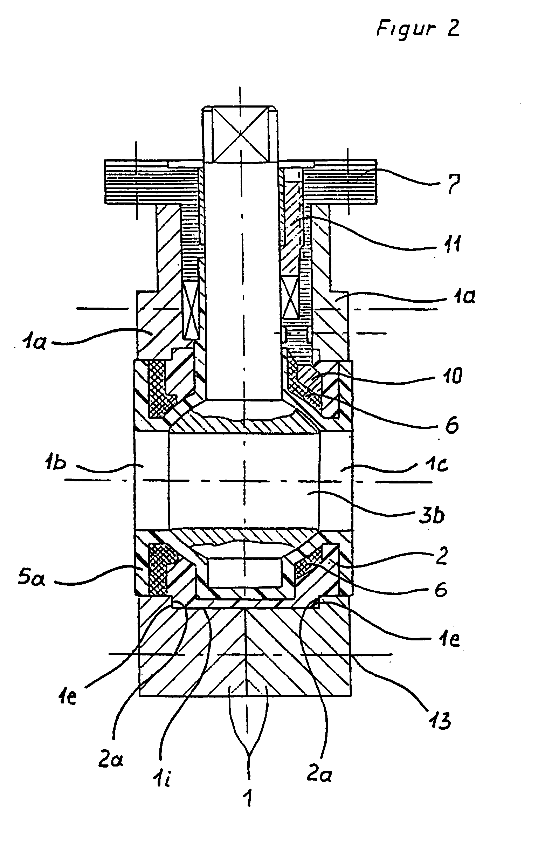

Die Figur 1 zeigt einen Kugelhahn mit einem zweiteiligen Gehäuse 1, welches zweckmäßig mittig geteilt ist, so daß sich zwei Gehäusehälften 1a ergeben. In beiden Gehäusehälften 1a ist koaxial zur Zu- und/oder Abgangsöffnung 1b, 1c eine zylindrische Aussparung 1d vorgesehen, die zweckmäßig eine Abstufung aufweist, so daß sich eine Gehäuseschulter 1e ergibt. Diese Gehäuseschulter 1e ist insbesondere bei der Ausführung eines Kugelhahns als Kompaktarmatur von Vorteil, wie eine solche später in Figur 2 beschrieben wird. An den Gehäusehälften 1a ist je zur Hälfte ein Lagerhals 1f angeformt. In dem zweiteiligen Gehäuse 1 ist in der Aussparung 1d ein Kugelhahneinsatz mit seinem Gehäusekörper 2 in Durchflußrichtung einsetzbar angeordnet.

Der Kugelhahneinsatz weist ein Absperrelement bestehend aus Kugel 3 mit Schaltwelle 4 und unterem Lagerzapfen 3a auf. Der untere Lagerzapfen 3a kann auch entfallen. Die Kugel 3 mit Schaltwelle 4 und unterem Lagerzapfen 3a sind mit einer Auskleidung 5 umgeben, die sich von Flansch 5a zu Flansch 5a nahtlos erstreckt. Das Absperrelement ist in der Auskleidung 5 drehbar angeordnet. Die Auskleidung 5 liegt an der peripheren Oberfläche der Kugel 3, zum Teil an der Schaltwelle 4 und am unteren Lagerzapfen 3a an. Die Kugel 3 ist mit einem Durchgang 3b versehen, der im geöffneten Zustand der Armatur den Zu- und/oder Abgang 1b, 1c miteinander verbindet, so daß das Medium fließen kann. Im abgesperrten Zustand der Armatur steht die Achse des Durchganges 3b senkrecht zur Achse der Durchflußrichtung. Elastische Einlagen 6 sind an der dem Absperrelement abgewandten Seite zwischen der Auckleidung 5 und dem Gehäusekörper 2 an den zur Abdichtung des Absperrelementes gegenüber der Auskleidung 5 erforderlichen Bereichen angeordnet.

Der Gehäusekörper 2 kann aus einem metallischen Werkstoff bestehen. In diesem Fall ist eine insbesondere mittige Teilung, sei es horizontal oder vertikal von Vorteil. Hierdurch lassen sich einerseits das Absperrelement und auch die elastischen Einlagen 6 und sofern vorhanden, auch das Druckstück 10 für den Auskleidungsvorgang günstig montieren und andererseits ist im Falle einer Reparatur eine vereinfachte Demontage durch Trennung der Auskleidung 5 in der Teilungsebene gegeben. Bei horizontaler Teilung des Gehäusekörpers 2 ist es auch möglich, die elastischen Einlagen 6 und sofern vorhanden, auch das Druckstück 10 nach dem Auskleidungsvorgang zwischen den Flanschen 5a an der Auskleidung 5 anzuordnen. Selbstverständlich wäre auch eine ungeteilte Ausführung des Gehäusekörpers 2 möglich.

Der Gehäusekörper 2 kann aber auch aus Kunststoff auf die Auskleidung 5 gespritzt, gepreßt oder gegossen werden, wobei die vorher an der Auskleidung 5 angeordneten elastischen Einlagen 6 so weit wie erforderlich im Gehäusekörper 2 mit eingebettet werden. Dieser Kunststoff für den Gehäusekörper 2 muß sich bei einer Temperatur verarbeiten lassen, bei der die Auskleidung 5 und die elastische Einlage 6 während des Fertigungsprozesses für den Gehäusekörper 2 noch keinen Schaden erleiden. Der Gehäusekörper 2 kann aber auch zweiteilig aus Kunststoff, ähnlich dem metallischen Gehäusekörper 2 gestaltet sein.

Die Auskleidung 5 ist an den für die Funktion des Öffnungs- und Schließvorganges der Armaturen erforderlichen Stellen in dem Gehäusekörper 2 verankert. Verankerungen sind insbesondere im Schwenkbereich des Durchganges 3b von der Kugel 3, außer in den Dichtzonen von Nutzen. Bei einem metallischen Gehäusekörper 2 kann dies z.B. in schwalbenschwanzförmigen Nuten erfolgen die im Gehäusekörper 2 angeordnet sind. Eine Verankerung zwischen der Auskleidung 5 und dem Gehäusekörper 2 aus Kunststoff kann formschlüssig durch z.B. Einbettung von an der Auskleidung 5 angeordneten Nasen oder Nocken erfolgen oder durch Verklebung von der Auskleidung 5 mit dem Gehäusekörper 2 an den erforderlichen Stellen mittels eines Haftvermittlers.

Der Lagerhals 1f ist zweckmäßig einstückig mit dem Gehäuse 1 bzw. mit den Gehäusehälften 1a ausgeführt. Er kann aber auch getrennt ausgeführt und mittels Schrauben auf dem Gehäuse 1 montiert werden. Wenn der Gehäusekörper 2 aus Kunststoff hergestellt ist, kann der Lagerhals 1f auch einstückig mit dem Gehäusekörper 2 ausgeführt werden.

Die linke Hälfte der Figur zeigt einen Kugelhahneinsatz mit elastischen Einlagen 6 die im Dichtbereich um den Durchgang 3b angeordnet sind und sich auch auf den Bereich von Flansch 5a erstrecken. Die elastischen Einlagen 6 in der rechten Hälfte der Figur erstrecken sich über den gesamten Kugelbereich außer an den Verankerungsstellen und erfassen den Bereich der Schaltwelle 4. Im Lagerhals 1f ist ein Druckflansch 7, der einen zylindrischen Ansatz 7a aufweist, angeordnet. Mittels Schrauben 7b ist der Druckflansch 7 am Lagerhals 1f befestigt. Die linke Hälfte der Figur zeigt einen Druckflansch 7 in dem eine Lagerbüchse 8 angeordnet ist. Koaxial zur Schaltwelle 4 und in einem Abstand zu dieser ist ein Freiraum 9 angeordnet in dem ein elastischer Werkstoff wie z.B. Reingraphit eingelegt ist. Dieser wird über den Ansatz 7a von dem Druckflansch 7 so weit zusammengepreßt, bis die Abdichtung zwischen der Auskleidung 5 und der Schaltwelle 4 erreicht ist. Die rechte Hälfte der Figur zeigt einen Druckflansch 7 dessen Ansatz 7a mit der zur Kugel 3 gerichteten Schräge gegen die elastische Einlage 6 und somit gegen die Auskleidung 5 an der Schaltwelle 4 wirkt. Gleichzeitig wirkt der Ansatz 7a gegen das Druckstück 10, welches gegen die elastische Einlage 6 im Kugel- und Schaltwellenbereich wirkt und die Abdichtung sowohl um den Durchgang 3b von Kugel 3 herum wie auch im Kugel- und Schaltwellenbereich zwischen Auskleidung 5 und Kugel 3 mit Schaltwelle 4 herbeiführt. Im Ansatz 7a von Druckflansch 7 ist ein Freiraum 9 koaxial zur Schaltwelle 4 angeordnet in dem ein elastischer Werkstoff eingeleget ist. Gegen diesen wirkt die Druckschraube 11 um eine weitere Abdichtung an der Schaltwelle 4 herbeizuführen. In der Druckschraube 11 ist eine Lagerbüchse 8 angeordnet. Eine Bohrung für einen Kontrollanschluß 12 kann zwischen den an der Schaltwelle 4 gelegenen Abdichtungen zum Zwecke der Dichtheitsprüfung zur Atmosphäre hin angeordnet werden. Der Kugelhahneinsatz wird in das zweiteilige Gehäuse 1 eingesetzt und zwischen den Flanschen 5a mittels Schrauben 13 verspannt, wobei eine axiale Begrenzung an den Schultern 2a von Gehäusekörper 2 und/oder an den Flanschflächen 1j der Gehäusehälften 1a erfolgt. Da die Länge des Kugelhahneinsatzes ein Übermaß gegenüber der Länge zwischen den Dichtspiegeln 1g der Aussparung 1d aufweist, erfolgt an den Flanschen 5a die Abdichtung gegenüber den Dichtspiegeln 1g der Gehäusehälften 1a. Wie in der linken unteren Hälfte der Figur dargestellt, kann auch der Flansch 5a bis zum Gehäusekörper 2 oder auch noch bis in den Gehäusekörper hinein vorgesehen werden. Dadurch ergibt sich zusätzlich radial eine Abdichtung gegenüber der Aussparung 1d. Bei der Anordnung der elastischen Einlagen 6 nach der linken Hälfte der Figur wird gleichzeitig über die Verspannung die Abdichtung um den Durchgang 3b von Kugel 3 zwischen der Auskleidung 5 und Kugel 3 bewirkt.

Die rechte Gehäusehälfte 1a in dieser Figur ist mit Kunststoff 1h, wie strichliert dargestellt, ausgekleidet. Zweckmäßig wird hierfür ein Fluorkunststoff vorgesehen. Es genügt, wenn der Kunststoff 1h den Dichtspiegel 1g erfaßt. Die linke Gehäusehälfte 1a ist nicht ausgekleidet dargestellt. In diesem Fall muß das Gehäuse 1 ein gegen das Medium resistenten Werkstoff aufweisen. Zur Betätigung der Armatur kann ein Betätigungsorgan an der Fläche 4a von Schaft 4 angebracht werden. Die Figur 2 zeigt einen Kugelhahn mit auswechselbaren Kugelhahneinsatz als Kompaktarmatur in einem geteilten Gehäuse 1. Der Kugelhahneinsatz entspricht im Aufbau dem nach Figur 1, lediglich ist der Gehäusekörper 2 einteilig aus Kunststoff gespritzt oder gepreßt gestaltet. Er könnte aber auch zweiteilig aus einem z.B. metallischen Werkstoff vorgesehen werden. In der rechten Hälfte der Figur ist ein Druckstück 10 nur an der zum Druckflansch 7 gerichteten Seite angeordnet, das zweckmäßig im Gehäusekörper 2 zusammen mit der elastischen Einlage 6 beim Spritz- oder Preßvorgang mit eingebettet wird. Eine Ausmittlung der von Druckflansch 7 über Druckstück 10 gegen die elastische Einlage 6 wirkende Anpreßkraft gegenüber der entgegengesetzt gelegenen elastischen Einlage 6 erfolgt in etwa über die Kugel 3, da diese in Druckrichtung gleiten kann. Wenn der Gehäusekörper 2 aus Kunststoff gespritzt oder gepreßt ist, kann auch der Lagerhals 1f, wie bereits in Figur 1 erwähnt, einstückig mit dem Gehäusekörper 2 ausgeführt werden. Bei der gespritzen oder gepreßten Ausführung des Gehäusekörpers 2 aus Kunststoff ergibt sich bereits über den Spritz- oder Preßdruck eine Anpressung der elastischen Einlagen 6 an die Auskleidung 5, die über den Druckflansch 7 verstärkt werden kann. Das für eine Kompaktarmatur ausgeführte Gehäuse 1, bestehend aus den beiden Gehäusehälften 1a weist in den Gehäusehälften 1a koaxial zum Durchgang 3b der Kugel 3 eine durchgehende Bohrung 1i mit abgesetzter Gehäuseschulter 1e auf. Der Kugelhahneinsatz wird in Durchflußrichtung in die Gehäusehälften 1a eingesetzt und an den Schultern 2a des Gehäusekörpers 2 zwischen den Gehäuseschultern 1e der Gehäusehälften 1a mittels Schrauben 13 verspannt. Die Länge des Gehäuses 1 ist etwas geringer als die Länge von Flansch 5a zu Flansch 5a des Kugelhahneinsatzes. Bei der Verflanschung innerhalb einer Rohrleitung oder dergleichen ergibt sich dadurch die entsprechende Abdichtung an den Flanschen 5a. Für die in den Figuren 1 und 2 dargestellten Kugelhähnen erfolgt die Lagerung des Absperrelementes sowohl im Kugelhahneinsatz als auch im Gehäuse 1. Die Abdichtung an der Schaltwelle 4 bzw. zur Atmosphäre hin erfolgt in der linken Hälfte der Figuren im Gehäuse 1, wobei sich die Auskleidung 5 des Kugelhahneinsatzes durchgehend bis über den Abdichtbereich hinaus an der Schaltwelle 4 erstreckt. Die Abdichtung zur Atmosphäre hin in der rechten Hälfte der Figur erfolgt sowohl im Kugelhahneinsatz, nämlich am Kugel- und Schaltwellenbereich, als auch im Gehäuse 1 an der Schaltwelle 4.

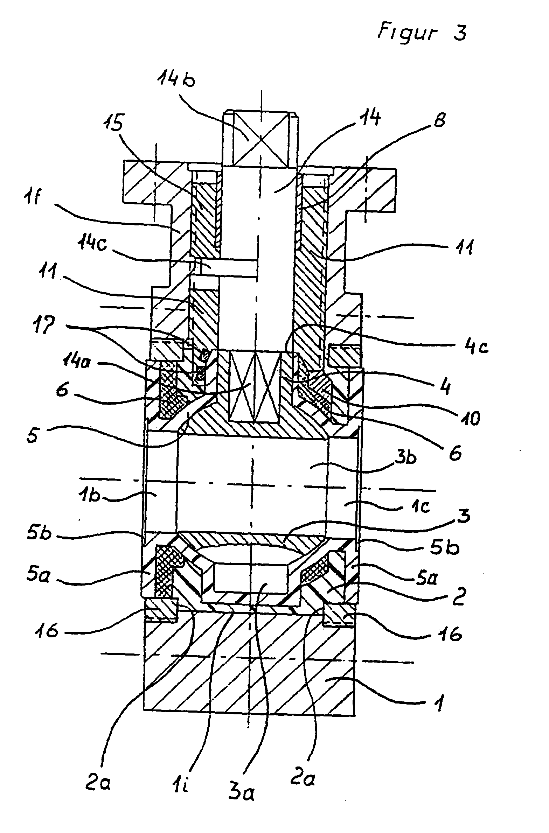

Die Figur 3 zeigt einen Kompaktkugelhahn mit auswechselbarem Kugelhahneinsatz in einem einteiligen Gehäuse 1. Das Gehäuse 1 ist mit einer koaxial zum Durchgang 3b der Kugel 3 angeordneten durchgehenden Bohrung 1i versehen, in der der Kugelhahneinsatz einschiebbar angeordnet ist. Diese Bohrung 1i kann durchgehend ohne Absatz gestaltet sein und an der rechten und linken Gehäuseseite je ein Gewinde für die Gewinderinge 16 aufweisen. Die durchgehende Bohrung 1i kann aber auch, wie in der Figur dargestellt, für die beiden Gewinde in denen die Gewinderinge 16 angeordnet sind, an der rechten und linken Gehäuseseite nach außen abgestuft ausgeführt sein. Der Kugelhahneinsatz wird in der Bohrung 1i von Gehäuse 1 mittels Gewinderinge 16 gegen die Schultern 2a von Gehäusekörper 2 verspannt. An einer Seite der Bohrung 1i kann auch anstatt eines Gewinderinges 16 eine Gehäuseschulter 1e, wie in den Figuren 1 und 2 gezeigt, angeordnet werden. Der Kugelhahneinsatz wird dann in der Bohrung 1i über den an der entgegengesetzten Seite der Bohrung 1i angeordneten Gewindering 16 gegen die Gehäuseschulter 1e an den Schultern 2a des Gehäusekörpers 2 verspannt. Der Kugelhahneinsatz ist ähnlich dem der Figur 2 gestaltet, lediglich reicht die Schaltwelle 4 maximal nur bis zum Außendurchmesser des Gehäusekörpers 2, damit der Kugelhahneinsatz in die Bohrung 1i des einteiligen Gehäuses 1 eingeschoben werden kann. Der Lagerhals 1f ist zweckmäßig einstückig mit dem Gehäuse 1 ausgeführt. Er kann aber auch getrennt ausgeführt und z.B. mittels Schrauben auf dem Gehäuse 1 montiert werden. Im Lagerhals 1f ist die Schaltwellenverlängerung 14 in einer Lagerbüchse 8, die innerhalb einer Druckschraube 11 oder Stellschraube 15 angeordnet ist, gelagert. Die Schaltwellenverlängerung 14 weist an der zur Kugel 3 gerichteten Seite einen Vierkant 14a auf der formschlüssig in den Vierkant von der Schaltwelle 4 eingreift. An der der Kugel 3 abgewandten Seite weist die Schaltwellenverlängerung 14 eine Fläche 14b oder dergleichen zur Aufnahme eines Betätigungsorganes auf. Zur Sicherung der axialen Lage kann die Schaltwellenverlängerung 14 mit einem Bund 14c versehen sein, der axial an der der Kugel 3 abgewandten Seite durch die Stellschraube 15 begrenzt ist. Die Abdichtung an der Schaltwelle 4 in der rechten Hälfte der Figur wird über die Druckschraube 11 herbeigeführt in dem sie mit ihrer zur Kugel 3 gerichteten Schräge gegen die elastische Einlage 6 und somit gegen die Auskleidung 5 an der Schaltwelle 4 wirkt. Gleichzeitig wirkt die Druckschraube 11 in der bereits in Figur 1 beschriebenen Weise gegen das Druckstück 10 mit der weiteren bekannten Wirkungsweise zur Abdichtung an der Kugel 3. Zur Abdichtung an der Schaltwelle 4 in der linken Hälfte der Figur dient die Druckschraube 11, in welcher an der zur Auskleidung 5 an der zur Schaltwelle 4 gerichteten Seite zwei O-Ringe 17 angeordnet sind, die gegen die an der Schaltwelle 4 anliegende Auskleidung 5 wirken. Gleichzeitig kann die Schräge der Druckschraube 11 auch direkt gegen die Schräge der Auskleidung 5 wirken. Die Abdichtung um den Bereich des Durchganges 3b von der Kugel 3 erfolgt in der in Figur 1 bereits beschriebenen Weise. Der Gehäusekörper 2 kann in Kunststoff oder aus einem metallischen Werkstoff vorgesehen werden. Die Länge des Gehäuses 1 ist etwas geringer als die Länge des Kugelhahneinsatzes von Flansch 5a zu Flansch 5a um bei der Verflanschung innerhalb einer Rohrleitung oder dergleichen die Abdichtung an den Flanschen 5a und damit gleichzeitig eine Trennung der der Auskleidung 5 nachgeschalteten Teile gegenüber dem Medium zu erreichen. Eine Aussparung 5b an der Seite von Flansch 5a kann zur Entlastung des Anpreßdruckes gegen die Kugel 3 außerhalb des Bereiches der elastischen Einlagen 6 dienen. Die Lagerung des Absperrelementes und die Abdichtung an diesem zur Atmosphäre hin erfolgt sowohl für den in der rechten als auch in der linken Hälfte dieser Figur dargestellten Kugelhahn im Kugelhahneinsatz. Die Lagerung erfolgt an der Schaltwelle 4, am unteren Lagerzapfen 3a und bedingt durch die am peripheren Bereich der Kugel 3 anliegenden Auskleidung 5, auch an der Kugel 3. Die Abdichtung zur Atmosphäre hin erfolgt an der Schaltwelle 4 über die Anpressung der elastischen Einlagen 6 an die Auskleidung 5. Sofern die Ausführung nach der rechten Hälfte der Figur vorgesehen wird, erfolgt zur Atmosphäre hin bereits eine Abdichtung vor der Schaltwelle 4 an dem zur Schaltwelle 4 gelegenen Kugelbereich. Die Auskleidung 5 reicht bis zur Stirnfläche 4c oder nahezu bis zur Stirnfläche 4c der Schaltwelle 4 und umgibt diese anliegend. Das Gehäuse 1 besteht zweckmäßig aus einem metallischen Werkstoff. Sofern es aus Kunststoff vorgesehen ist, ist es sinnvoll, eine metallische Verstärkung im Bereich der Bohrung 1i vorzusehen, die sich auch bis über die Durchgangsbohrungen oder Gewindebohrungen des Flanschanschlusses erstrecken kann. Auch ist es zweckmäßig den Lagerhalsbereich in die Verstärkung mit einzubeziehen. Die Gewinderinge 16, die Druckschraube 11 und die Stellschraube 15, sowie sonstige Gewindebohrungen im Gehäusebereich können in der metallischen Verstärkung angeordnet werden.

Für ein zweiteiliges Gehäuse 1 gemäß den Figuren 1 und 2, sofern dieses in Kunststoff ausgeführt ist, ist eine metallische Verstärkung in ähnlicher Form wie für Figur 3 beschrieben, ebenfalls sinnvoll.

Der Kugelhahneinsatz weist in der Auskleidung 5 eine Zu- und/oder Abgangsöffnung 1b, 1c auf, die bei der Ausführung als Kompaktarmatur, wie in den Figuren 2 und 3 dargestellt, auch gleichzeitig die Zu- und/oder Abgangsöffnung 1b, 1c des Kugelhahns bilden. In der Ausführung des Kugelhahns nach der Figur 1, bzw. bei einer solchen in langer Bauweise, setzt sich die Zu- und/oder Abgangsöffnung 1b, 1c des Kugelhahneinsatzes bzw. der Auskleidung 5 in der Zu- und/oder Abgangsöffnung 1b, 1c von Gehäuse 1 fort.

Sofern bei den Ausführungen nach den Figuren 1 bis 3 und den noch folgenden Ausführungsbeispielen der Gehäusekörper 2 aus Kunststoff ausgeführt ist, besteht die Möglichkeit den Druck für den Fertigungsvorgang unter Berücksichtigung der Schrumpfung so zu bemessen, daß eine ausreichende Anpressung der elastischen Einlagen 6 an die Auskleidung 5 zur Erreichung der Dichtheit gewährleistet ist. Druckstück 10 mit nachgeschalteten Andrückelementen könnten dann entfallen. Dies kann für die Abdichtung an der Kugel 3 und/oder für die Abdichtung an der Schaltwelle 4 vorgesehen werden. Die elastischen Einlagen 6 bestehen z.B. aus Reingraphit, aus einem Elastomer oder aus einem sonstigen elastischen Werkstoff. Auch ein metallisches Federglied ist als elastische Einlage möglich.

Die Kunststoffauskleidung bzw. die Auskleidung 5 wird im Spritz- oder Preßverfahren erstellt. In der linken Hälfte der Figur 1 ist an der elastischen Einlage 6 eine metallische Verstärkung 6a zum Schutz gegen den Spritz- oder Preßdruck beim Auskleidungsvorgang angeordnet. Ebenfalls in dieser Hälfte der Figur 1 weist der Gehäusekörper 2 eine Nut 2b auf. In dieser Nut 2b kann im Falle einer Reparatur ein Sicherungsring eingesetzt werden um die Trennung des Gehäusekörpers 2 mit der Auskleidung 5 z.B. unter einer Presse herbeizuführen. Beim Trennvorgang stützt sich der Gehäusekörper 2 am Sicherungsring an einem hülsenförmigen Körper ab und der Pressenstößel wirkt gegen die in Schließstellung befindlichen Kugel 3 um die Trennung der Auskleidung 5 in der Teilungsebene zu erreichen. Die Nut 2b ist für einen Trennvorgang auch bei den Ausführungsbeispielen nach den Figuren 2 und 3 sowie den noch folgenden stets dann sinnvoll, wenn der Gehäusekörper 2 vertikal zur Durchflußebene geteilt ist und aus einem metallischen oder sonstigen festen Werkstoff besteht. Diese Maßnahme rationalisiert die Reparaturarbeit. Selbstverständlich wäre aber auch ein Kugelhahneinsatz mit ungeteilten metallischem Gehäusekörper möglich.

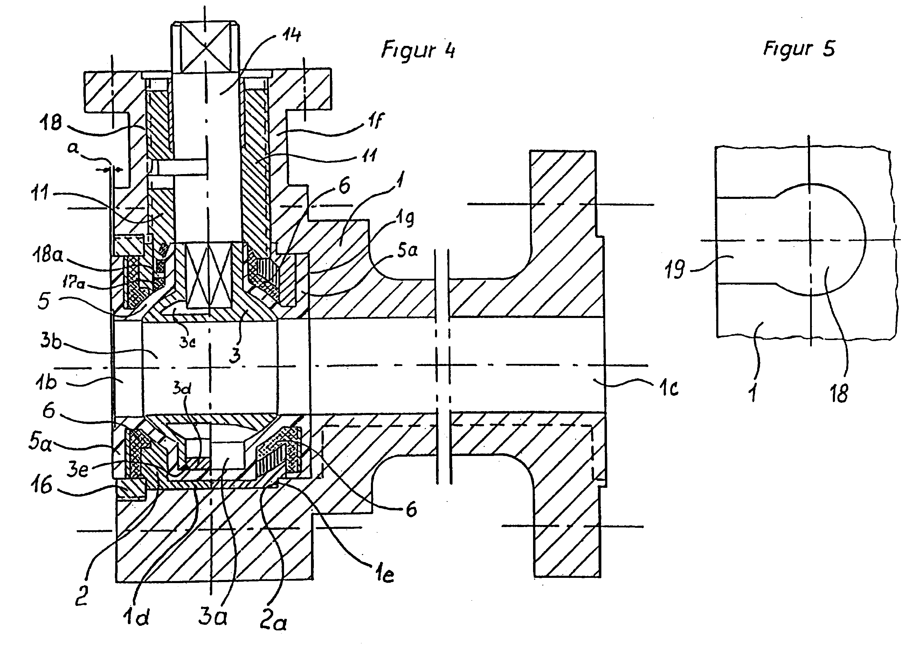

Die Figur 4 zeigt einen Kugelhahn mit auswechselbarem Kugelhahneinsatz in ähnlicher Form wie in Figur 3 dargestellt, in einem einteiligen Gehäuse 1 mit Flanschanschluß in langer, je nach Erfordernis gewählter Baulänge mit Zu- und/oder Abgangsöffnung 1b, 1c. Der bereits zur Atmosphäre hin abgedichtete oder noch abzudichtende Kugelhahneinsatz ist in dem Gehäuse 1 in Durchflußrichtung einschiebbar angeordnet. Um die Einschiebbarkeit zu ermöglichen, reicht die Schaltwelle 4 nur maximal bis zum Außendurchmesser des Gehäusekörpers 2. Die Schaltwellenverlängerung 14, die auch zur Auskleidung 5 hin über die Druckschraube 11 und zwischen der Druckschraube 11 und der Schaltwellenverlängerung 14 abgedichtet sein kann, was einer weiteren Abdichtung gegenüber der Atmosphäre entspricht, ist im Gehäuse 1 angeordnet und formschlüssig im Steckverfahren über einen Vierkant oder z.B. über ein Sternprofil, Flachkant oder ähnlich mit der Schaltwelle 4 verbunden. Der Gehäusekörper 2 ist in metallischer Ausführung dargestellt. Dieser kann aber auch aus Kunststoff oder z.B. aus Keramik vorgesehen werden. Sofern er aus Kunststoff vorgesehen ist kann es sinnvoll sein, wenn am Außendurchmesser oder im Bereich des Außendurchmessers ein metallischer Mantel bzw. ein metallischer Verstärkungsring angeordnet ist.

Sinnvoll ist, wenn dieser metallische Mantel senkrecht zur Durchflußrichtung geteilt ist und die beiden Hälften mittig mit ihren Stirnseiten zusammenstoßen. Hierbei weist der metallische Mantel für den Schaltwellenbereich und sofern vorhanden, auch für den unteren Lagerzapfenbereich eine entsprechende Aussparung auf. Durch den Metallmantel am Gehäusekörper 2 aus Kunststoff wird die Druckfestigkeit des Kugelhahneinsatzes erhöht und gleichzeitig auf Grund des geringeren Wärmeausdehnungskoeffizienten gegenüber Kunststoff verhindert, daß sich der Kunststoff bei Temperaturanstieg zu stark ausdehnt, was ein Nachlassen der Dichtheit zur Folge haben kann. Gleiches wird erreicht, wenn der Gehäusekörper 2 aus Kunststoff in ein metallisches Gehäuse 1 oder in ein solches aus Kunststoff mit metallischer Einlage im Bereich des Innendurchmessers des Gehäuses 1 eingesetzt wird. Die Erhaltung der Dichtheit über den gesamten Temperaturbereich des für die Armatur vorgesehenen Einsatzgebietes ist ein großer Vorteil für die Armatur. Dieser Vorteil wird in Verbindung mit dem metallischen Mantel bzw. mit der Metalleinlage oder mit dem metallischen Gehäuse 1 vor allem deshalb erzielt, da die elastische Einlage 6 eine gleichmäßige Wanddicke im Kugelbereich aufweist und der Gehäusekörper 2 aus Kunststoff an dieser elastischen Einlage 6 mit gleichmäßigem Druck angeformt wird.

Die linke Hälfte der Figur weist elastische Einlagen 6 auf, die sich über den Dichtbereich um den Durchgang 3b der Kugel 3 und auf den Bereich der Flansche 5a erstrecken. Die rechte untere Hälfte zeigt eine elastische Einlage 6 die noch zusätzlich in den Kugelbereich hineinreicht. Die rechte obere Hälfte zeigt eine elastische Einlage 6, die sich über den für die Abdichtung zwischen Kugel 3 und Auskleidung 5 erforderlichen Kugelbereich erstreckt, der gleichzeitig den Bereich um den Durchgang 3b einschließt. Ebenso wird von der elastischen Einlage 6 der an der Schaltwelle 4 anliegende Bereich der Auskleidung 5 erfaßt. Die elastischen Einlagen 6 können ein- oder mehrteilig ausgeführt sein. Das Gehäuse 1 weist an einer Seite stirnseitig eine Aussparung 1d von der Länge des Kugelhahneinsatzes, abzüglich des für die Verpressung gestalteten Überstandes "a" bzw. der Überstände "a" auf, die für die Erreichung der Dichtheit an den Flanschen 5a vorgesehen sind. Gleichzeitig tragen die Überstände auch zur Dichtheit am Zu- und Abgangsbereich des Durchganges 3b bei. Der Überstand "a" erstreckt sich sinnvoll über den gesamten Dichtspiegel 1g. Die Aussparung 1d weist zweckmäßig eine Gehäuseschulter 1e zur Verspannung des Kugelhahneinsatzes an den Schultern 2a über Gewindering 16 auf, wobei gleichzeitig ein Flansch 5a dichtend gegen den Dichtspiegel 1g von Gehäuse 1 wirkt. Dadurch ist eine Verspannung gegen einen Festanschlag möglich. Selbstverständlich könnte auch die zum Dichtspiegel 1g gelegene Schulter 2a des Gehäusekörpers 2 und damit auch die Gehäuseschulter 1e entfallen. Der Kugelhahneinsatz findet dann mit Flansch 5a am Dichtspiegel 1g seine Begrenzung. In diesem Fall ist es sinnvoll, wenn am Flansch 5a noch eine kleine metallische Ringfläche am äußeren Bereich des Gehäusekörpers 2 für einen Festanschlag vorhanden ist, was praktisch der Schulter 2a und Gehäuseschulter 1e gleichkommt. Anstatt über einen Gewindering 16 kann der Kugelhahneinsatz selbstverständlich auch über z.B. einen stirnseitig am Gehäuse 1 angeordneten Ring über Schrauben verspannt werden, die in Gewindebohrungen, die im Gehäuse 1 angeordnet sind, eingreifen. Die Druckschraube 11 in der Zentralbohrung 18 reicht zweckmäßig bis in die Zentralbohrung 18a des Kugelhahneinsatzes hinein.

Dadurch erübrigt sich ein Positionsstift z.B. in axialer Anordnung. Anstatt einer Druckschraube 11 kann selbstverständlich auch z.B. eine Hülse vorgesehen werden, die axial verspannt wird. Die Druckschraube 11 oder eine entsprechende Hülse wirkt über die elastische Einlage 6, über O-Ring 17 oder über einen elastischen Werkstoff 17a gegen die Auskleidung 5 und dichtet zwischen der Kugel 3 und/oder Schaltwelle 4 und der Auskleidung 5 zur Atmosphäre hin ab. Um den Abdichtbereich zur Atmosphäre hin zu verbessern, kann die Kugel 3 an der Seite der Schaltwelle 4 auch abgeflacht ausgeführt werden. Ebenso können Dichtrillen oder Dichtnuten angeordnet werden. Eine Abflachung kann auch an der entgegengesetzten Seite erfolgen. Der Kugelhahneinsatz dichtet an einer Seite am Flansch 5a gegen den Flanschspiegel 1g von Gehäuse 1 ab. Der auf der entgegengesetzten Seite gelegenen Flansch 5a des Kugelhahneinsatzes dichtet gegen den Gegenflansch von der Rohrleitung oder dergleichen ab. Nach dem Flanschspiegel 1g setzt sich das Gehäuse 1, mit der jeweils vorgesehenen Nennweite für den Durchfluß des Mediums versehen, bis zum Abschluß der Baulänge des Kugelhahns fort. Die obere Hälfte des Gehäuses 1 zeigt ein nicht ausgekleidetes Gehäuse 1. In der unteren Hälfte des Gehäuses 1 ist durch die strichlierte Linie eine Auskleidung des Gehäuses 1 z.B. mit einem Fluorkunststoff angedeutet. Der Anschluß des Gehäuses 1 an der dem Kugelhahneinsatz entgegengesetzten Seite kann für einen Flansch-, Gewinde-, Schweißstutzen-, Klebemuffen- oder für einen sonstigen Anschluß gestaltet werden. Der Lagerhals 1f kann mit dem Gehäuse 1 einstückig ausgeführt sein oder als getrenntes Teil auf das Gehäuse 1 aufgesetzt und mit Schrauben befestigt sein. In der linken Hälfte der Figur ist die Kugel 3 mit einem Hohlraum 3c ausgeführt. Der Hohlraum 3c kann sich ganz oder teilweise zwischen der Wandung von der Oberfläche der Kugel 3 und der Wandung des Durchganges 3b erstrecken. In Feinguß nach dem Wachsausschmelzverfahren läßt sich ein derartiger Hohlraum 3c entsprechend herstellen. Der für den Hohlraum 3c erforderliche Kern kann an der Seite zur Schaltwelle 4, und an der der Schaltwelle 4 entgegengesetzten Seite, an dem unteren Lagerzapfen 3a, der zweckmäßig als Hohlzapfen ausgebildet ist, zentriert werden. Nach dem Gießvorgang kann der Hohlzapfen durch z.B. eine Platte 3d über eine Schweißnaht 3e verschlossen bzw. abgedeckt werden. An der Seite der Schaltwelle 4 kann zweckmäßig über den Kern gleichzeitig das für die formschlüssige Verbindung mit der Schaltwellenverlängerung 14 erforderliche Profil mit eingeformt werden.

Die Kugel 3 mit Hohlraum 3c stellt eine weitere Verbesserung der Erfindung insbesondere für Kugelhähne mit größerer Nennweite oder für Kugelhähne in einem Kunststoffgehäuse, einerlei nach welchem Ausführungsbeispiel, dar. Durch das geringere Gewicht der Kugel 3 mit Hohlraum 3c gegenüber einer Vollkugel ergibt sich durch den schnelleren Erwärmungs- und Abkühlvorgang eine Energieersparnis und Rationalisierung beim Auskleidungsvorgang. Bei Kugelhähnen mit einem Kunststoffgehäuse führt die Kugel 3 mit Hohlraum 3c darüber hinaus zu einer erheblichen Gewichtseinsparung in Relation zum Gesamtgewicht des Kugelhahns. Weiterhin trägt die kürzere Wärmehaltezeit, die sich bis zum Beginn des Abkühlungsvorgangs des Verarbeitungsprozesses für den Auskleidungsvorgang erstreckt, zur Erhaltung der Wärmestabilität für den Kunststoff der Auskleidung und für das für den Auskleidungsvorgang erforderliche Trennmittel, bei. Dadurch ergibt sich eine höhere Sicherheit beim Auskleidungsvorgang und somit eine gleichbleibendere Qualität für das Produkt.

Auch ein Kugelhahneinsatz nach den Figuren 1 und 2, d.h., ein solcher bei dem die Schaltwelle 4 über den Außendurchmesser des Gehäusekörpers 2 hinausragt könnte als auswechselbarer Kugelhahneinsatz in ein einteiliges Gehäuse 1 axial in Durchflußrichtung eingesetzt werden. In diesem Fall ist am Gehäuse 1, sei es für ein Gehäuse in langer Bauweise oder als Kompaktarmatur, eine Ausnehmung 19 mindest in der Breite die dem Durchmesser der Schaltwelle 4 oder der an der Schaltwelle 4 befindlichen Auskleidung 5 entspricht, die im Bereich außerhalb des Gehäusekörpers 2 an der Schaltwelle 4 enden kann, erforderlich. In der Figur 5 ist skizzenmäßig eine solche Ausnehmung 19 an einem Ausschnitt von Gehäuse 1 dargestellt. Diese Ausnehmung 19 reicht bis in die Zentralbohrung 18 hinein bzw. mündet in dieser, in der die Schaltwelle 4 z.B. mit einer Druckschraube 11 angeordnet ist. Diese Ausnehmung 19 kann nach dem Einsetzen des Kugelhahneinsatzes in das Gehäuse 1 wieder abgedeckt werden. Sofern der Lagerhals 1f mit dem Gehäuse 1 nicht einstückig ausgeführt ist, kann dies z.B. über den am Gehäuse 1 montierten Lagerhals 1f erfolgen. Durch die seitliche Verflanschung des Kugelhahns innerhalb einer Rohrleitung oder dergleichen, wird die Druckfestigkeit des Gehäuses 1 mit Ausnehmung 19 begünstigt. Weiterhin ist nach der Verflanschung des Kugelhahns oft allein schon durch den Gehäusekörper 2 die Druckfestigkeit ausreichend gegeben insbesondere dann, wenn er aus einem metallischen Werkstoff besteht.

Bei der Ausführung der Kugelhähne mit Kugelhahneinsatz in einem geteilten Gehäuse 1 in langer Bauweise oder in Kompaktbauweise, wie sie beispielsweise in den Figuren 1 und 2 dargestellt sind, erfolgt die Teilung des Gehäuses 1 sinnvoll quer zur Durchflußrichtung. Dadurch erhält man ein Gehäuse 1 mit hoher Druckfestigkeit und der Kugelhahneinsatz läßt sich axial günstig in das Gehäuse 1 einsetzen.

Sofern der Gehäusekörper 2 horizontal bzw. längs der Durchflußrichtung geteilt ausgeführt ist, ist es für das Einsetzen des Kugelhahneinsatzes in das Gehäuse 1 zweckmäßig, wenn die beiden Hälften des Gehäusekörpers 2 über z.B. zwei Ringe, zweckmäßig an jeder Seite einer angeordnet, zusammengehalten werden. Diese Ringe können nach erfolgter Montage des Kugelhahneinsatzes im Gehäuse 1 an dem Gehäusekörper 2 verbleiben. Wenn der Kugelhahneinsatz im Gehäuse 1 eingesetzt ist, übt, je nach Gestaltung der elastischen Einlage 6, der Gehäusekörper 2 einen Druck auf die elastische Einlage 6 aus und drückt die Auskleidung 5 gegen die Kugel 3. Die Druckfestigkeit für den Kugelhahneinsatz bzw. für die Armatur wird durch das Gehäuse 1 gewährleistet.

## Patentansprüche

1. Kugelhahn mit einem Gehäuse (1) und einem in das Gehäuse (1) einsetzbaren, auswechselbaren Kugelhahneinsatz (2, 3, 4, 5, 6), wobei der Kugelhahneinsatz (2, 3, 4, 5, 6) ein Absperrelement (3, 4), eine Auskleidung (5) aus Kunststoff und elastische Einlagen (6) aufweist, wobei das in der Auskleidung (5) drehbar gelagerte Absperrelement (3, 4) eine Kugel (3) mit Schaltwelle (4) aufweist, die Kugel (3) einen Durchgang (3b) besitzt und die Auskleidung (5), die gleichzeitig als Dichtung gegenüber dem Absperrelement (3, 4) dient, die periphere Oberfläche der Kugel (3) und zum Teil die Schaltwelle (4) anliegend umschließt und mittels der elastischen Einlagen (6) an die Kugel (3) in den Dichtbereichen gedrückt wird, wobei ferner die Auskleidung (5) die elastischen Einlagen (6) dergestalt umgibt, daß sie außerhalb des Mediumbereiches angeordnet sind, sowie die Auskleidung (5) und das Gehäuse (1) mindestens eine Zu- und Abgangsöffnung (1b, 1c) aufweisen, **dadurch gekennzeichnet**, daß der Kugelhahneinsatz (2, 3, 4, 5, 6) zusätzlich einen Gehäusekörper (2) aufweist, wobei die Auskleidung (5) nahtlos durchgehend von Flansch (5a) zu Flansch (5a) der Auskleidung (5) reicht und die elastischen Einlagen (6) zwischen dem Gehäusekörper (2) und der Auskleidung (5) angeordnet sind, und die Auskleidung (5) den Gehäusekörper (2) dergestalt umgibt, daß er außerhalb des Mediumbereiches angeordnet ist, wobei der Kugelhahneinsatz (2, 3, 4, 5, 6) axial in Durchflußrichtung in das Gehäuse (1) eingesetzt ist und Schultern (2a) des Gehäusekörpers (2) zwischen Schultern (1e) des Gehäuses (1) oder zwischen mit dem Gehäuse (1) verbundenen Ringen (16) verspannt sind, oder die Flansche (5a) der Auskleidung (5) zwischen Dichtspiegeln (1g) des Gehäuses (1) verspannt sind.

2. Kugelhahn nach Anspruch 1, **dadurch gekennzeichnet**, daß der Gehäusekörper (2) zweiteilig ausgebildet ist und vorzugsweise aus einem metallischen Werkstoff ausgeführt ist.

3. Kugelhahn nach Anspruch 2, **dadurch gekennzeichnet**, daß die Schaltwelle (4) des Absperrelementes (3, 4) über den Durchmesser des Gehäusekörpers (2) hinausreicht.

4. Kugelhahn nach Anspruch 1, **dadurch gekennzeichnet**, daß der Gehäusekörper (2) einteilig ausgebildet ist und vorzugsweise aus einem Kunststoff ausgeführt ist.

5. Kugelhahn nach einem der Ansprüche 1, 2 und 4, **dadurch gekennzeichnet**, daß die Schaltwelle (4) maximal bis zum Außendurchmesser des Gehäusekörpers (2) reicht und mit der Schaltwelle (4) eine Schaltwellenverlängerung (14) verbunden ist.

6. Kugelhahn nach einem der Ansprüche 1 bis 5, **dadurch gekennzeichnet**, daß die Verspannung des Kugelhahneinsatzes (2, 3, 4, 5, 6) zwischen zwei im Gehäuse (1) angeordneten Gewinderingen (16) erfolgt.

7. Kugelhahn nach einem der Ansprüche 1 bis 5, **dadurch gekennzeichnet**, daß die Verspannung des Kugelhahneinsatzes (2, 3, 4, 5, 6) zwischen einer Gehäuseschulter (1e) des Gehäuses (1) und einem im Gehäuse (1) angeordneten Gewindering (16) oder einem am Gehäuse (1) angeschraubten Ring erfolgt.

8. Kugelhahn nach einem der Ansprüche 1 bis 5, **dadurch gekennzeichnet**, daß die Verspannung an einer Schulter (2a) des Kugelhahneinatzes (2, 3, 4, 5, 6) über einen im Gehäuse (1) angeordneten Gewindering (16) oder einen am Gehäuse (1) angeschraubten Ring erfolgt, wobei der Kugelhahneinsatz (2, 3, 4, 5, 6) an einem Flansch (5a) gegen den Dichtspiegel (1g) des Gehäuses (1) wirkt.

9. Kugelhahn nach einem der Ansprüche 1 bis 8, **dadurch gekennzeichnet**, daß über die bei der Verflanschung des Kugelhahneinsatzes (2, 3, 4, 5, 6) innerhalb des Gehäuses (1) und/oder einer Rohrleitung oder dergleichen in Durchflußrichtung wirkenden Spannkräfte die Abdichtung an den Flanschen (5a) gegenüber den Gegenflanschdichtflächen oder die Abdichtung an den Flanschen (5a) gegenüber den Gegenflanschdichtflächen und um den Durchgang (3b) der Kugel zwischen Auskleidung (5) und Kugel (3) bewirken.

10. Kugelhahn nach einem der Ansprüche 1 bis 9, **dadurch gekennzeichnet**, daß die Lagerung und Abdichtung der Schaltwelle (4) im Kugelhahneinsatz (2, 3, 4, 5, 6) erfolgt.

11. Kugelhahn nach einem der Ansprüche 1 bis 9, **dadurch gekennzeichnet**, daß die Lagerung des Absperrelementes (3, 4) sowohl im Kugelhahneinsatz (2, 3, 4, 5, 6) als auch im Gehäuse (1) erfolgt und die Abdichtung zur Atmosphäre hin an der Schaltwelle (4), im Gehäuse (1) und/oder im Kugelhahneinsatz (2, 3, 4, 5, 6) erfolgt.

12. Kugelhahn nach einem der Ansprüche 4 bis 11, **dadurch gekennzeichnet**, daß der einteilige Gehäusekörper (2) aus Kunststoff ausgeführt ist und auf die Auskleidung (5) gepreßt oder gespritzt ist, wobei die an der Auskleidung (5) angeordneten elastischen Einlagen (6) und, sofern vorhanden, ein an diesen anliegendes Druckstück (10) so weit wie erforderlich im Gehäusekörper (2) mit eingebettet sind.

13. Kugelhahn nach einem der Ansprüche 1 bis 12, **dadurch gekennzeichnet**, daß der Kugelhahneinsatz (2, 3, 4, 5, 6) eine über die Auskleidung (5), die insbesondere aus einem Fluorkunststoff besteht, zusammengefaßte, auswechselbare Einheit bildet.

14. Kugelhahn nach einem der Ansprüche 1 bis 13, **dadurch gekennzeichnet**, daß die Länge des Kugelhahneinsatzes (2, 3, 4, 5, 6) von Flansch (5a) zu Flansch (5a) größer ist als die Länge des Gehäuses (1) von einer Kompaktarmatur oder, daß die Länge des Kugelhahneinsatzes (2, 3, 4, 5, 6) von Flansch (5a) zu Flansch (5a) ein Übermaß gegenüber der Länge zwischen den Dichtspiegeln (1g) einer Aussparung (1d) zur Bildung der Gehäuseschulter (1e) oder der Länge der Aussparung (1d) aufweist.

15. Kugelhahn nach einem der Ansprüche 1 bis 14, **dadurch gekennzeichnet**, daß der Kugelhahneinsatz (2, 3, 4, 5, 6) in ein einteiliges Gehäuse (1) mit einer bis in die Zentralbohrung (18) des Gehäuses (1) hineinreichenden Ausnehmung (19) eingesetzt ist.

16. Kugelhahn nach einem der Ansprüche 1 bis 15, **dadurch gekennzeichnet**, daß die Kugel (3) zumindest teilweise einen Hohlraum (3c) zwischen der Wandung von der Oberfläche der Kugel (3) und der Wandung des Durchganges (3b) der Kugel (3) aufweist, der sich bis in die Schaltwelle (4) und/oder in den unteren Lagerzapfen (3a) hinein erstrecken kann.

17. Kugelhahn nach einem der Ansprüche 1 bis 16, **dadurch gekennzeichnet**, daß das Gehäuse (1) aus einem metallischen Werkstoff, aus Kunststoff oder aus Kunststoff mit metallischer Verstärkung besteht.

18. Kugelhahn nach einem der Ansprüche 1 bis 17, das am Außendurchmesser oder im Bereich des Außendurchmessers des Gehäusekörpers (2) aus Kunststoff ein metallischer Mantel angeordnet ist und/oder im Gehäuse (1) aus Kunststoff im Bereich des Innendurchmessers des Gehäuses (1) eine metallische Einlage angeordnet ist.

19. Kugelhahn nach einem der Ansprüche 1 bis 18, **dadurch gekennzeichnet**, daß die Auskleidung (5) im Gehäusekörper (2) verankert ist.

20. Kugelhahn nach einem der Ansprüche 1 bis 19, **dadurch gekennzeichnet**, daß eine metallische Verstärkung (6a) an der elastischen Einlage (6) angeordnet ist.

21. Kugelhahn nach einem der Ansprüche 1 bis 20, **dadurch gekennzeichnet**, daß eine Druckschraube (11) oder eine entsprechende Hülse über die elastische Einlage (6), über O-Ringe (17) oder über einen elastischen Werkstoff (17a) gegen die Auskleidung (5) wirkt und die Abdichtung zwischen Auskleidung (5) und Kugel (3) und/oder der Schaltwelle (4) zur Atmosphäre hin bewirkt.

## Claims

1. Ball valve with a housing (1) and an in the housing (1) insertable and changeable ball valve unit (2,3,4,5,6) in which the ball valve unit (2,3,4,5,6) has a shut-off element (3,4), a plastic lining (5) and resilient inlays (6), the shut-off element (3,4) has a ball (3) and a control shaft (4) and is rotatively mounted in the plastic lining (5), the ball (3) has a passage (3b) and the plastic lining (5) acts at the same time as a seal against the shut-off element (3,4), also surrounding and touching the peripheral surface of the ball (3) and partly of the control shaft (4) and pressed in the sealing areas via the resilient inlay (6) against the ball (3), at which the plastic lining (5) surrounds the resilient inlays (6) such that they are arranged outside the medium area, and wherein the plastic lining (5) and the housing (1) have at least one inlet and one outlet opening (1b, 1c), characterized in that the ball valve unit (2,3,4,5,6) has additionally a housing body (2) at which the plastic lining (5) runs smoothly between the flanges (5a) of to plastic lining (5) and the resilient inlays (6) are arranged between the housing body (2) and the plastic lining (5), and the plastic lining (5) surrounds to housing body (2) such that it is arranged outside the medium area, the ball valve unit (2,3,4,5,6) is inserted axially in the flow direction in the housing (1) and the shoulders (2a) of to housing body (2) are either squeezed between shoulders (1e) of the housing (1) or between the rings (16) which are connected to the housing (1) or the flanges (5a) of the plastic lining (5) are squeezed between the sealing surfaces (1g) of the housing (1).

2. Ball valve according to claim 1, characterized in that the housing body (2) has a splitted design and is preferably made of metal.

3. Ball valve according to claim 2, characterized in that the control shaft (4) of the shut-off element (3,4) exceeds the diameter of the housing body (2).

4. Ball valve according to claim 1, characterized in that the housing body (2) has a one piece design and is preferably made of a plastic material.

5. Ball valve according to one of claims 1, 2 and 4 characterized in that the control shaft (4) reaching not further than the outside diameter of the housing body (2) and the control shaft (4) is combined with a control shaft extension (14).

6. Ball valve according to one of claims 1 to 5, characterized in that the ball valve unit (2,3,4,5,6) is squeezed between two nuts (16) which are arranged in housing (1).

7. Ball valve according to one of claims 1 to 5, characterized in that the squeezing tension of the ball valve unit (2,3,4,5,6) takes place between one housing shoulder (1e) of housing (1) and one nut (16) arranged in housing (1) or via a ring which is fastened with screws on housing (1).

8. Ball valve according to one of claims 1 to 5, characterized in that the squeezing tension is on a shoulder (2a) from the ball valve unit (2,3,4,5,6) via a nut (16) arranged in housing (1) or via a ring which is fastened with screws on housing (1) and the ball valve unit (2,3,4,5,6) acts via a flange (5a) against the sealing surface (1g) of housing (1).

9. Ball valve according to one of claims 1 to 8, characterized in that the tension in flow direction created by the flanged joint of the ball valve unit (2,3,4,5,6) within the housing (1) and/or a pipeline or the like acts as the sealing on the flanges (5a) opposite to the counter flange surfaces or acts as the sealing on the flanges (5a) opposite to the counter flange surfaces and around the passage (3b) of the ball (3) between plastic lining (5) and ball (3).

10. Ball valve according to one of claims 1 to 9, characterized in that the bearing and sealing of the control shaft (4) take place in the ball valve unit (2,3,4,5,6).

11. Ball valve according to one of claims 1 to 9, characterized in that the bearing of the shut-off element (3,4) takes place in the ball valve unit (2,3,4,5,6) and also in the housing (1) and the sealing of the control shaft (4) to atmosphere takes place in the housing (1) and/or in the ball valve unit (2,3,4,5,6).

12. Ball valve according to one of claims 4 to 11, characterized in that the one-piece housing body (2) made of a plastic material is either pressed or injected on the plastic lining (5) at which the resilient inlays (6) being arranged on the plastic lining (5) and, if there is a peripheral press-part (10) are as far as required embedded in the housing body (2).

13. Ball valve according to one of claims 1 to 12, characterized in that the ball valve unit (2,3,4,5,6) which is linked via the plastic lining (5) preferably made of a fluor polymer, is a comprised changeable unit.

14. Ball valve according to one of claims 1 to 13, characterized in that the length of the ball valve unit (2,3,4,5,6) between the flanges (5a) exceeds the length of the housing (1) of a compact armature, or where the ball valve unit (2,3,4,5,6) between the flanges (5a) exceeds the distance between the sealing surfaces (1g) of the receding (1d) which forms the housing shoulder (1e) or which exceeds the width of the receding (1d).

15. Ball valve according to one of claims 1 to 14, characterized in that the ball valve unit (2,3,4,5,6) is inserted in a one-piece housing (1) with a sparing (19) which extends to the central bore (18) of the housing (1).

16. Ball valve according to one of claims 1 to 15, characterized in that the ball (3) has at least partly a hollow (3c) between the wall of the surface of the ball (3) and the wall of the passage (3b) of the ball (3), which can extend up to the control shaft (4) and/or the lower pivot (3a).

17. Ball valve according to one of claims 1 to 16, characterized in that the housing (1) is made of metal, plastic material or plastic material with metal enforcement.

18. Ball valve according to one of claims 1 to 17, characterized in that the outside diameter or in the area of the outside diameter of the housing body (2) made in plastic material with a metal coating is arranged on the housing body (2) and/or the housing (1) made of plastic material has in the area of the inside diameter a metallic inlay.

19. Ball valve according to one of claims 1 to 18, characterized in that the plastic lining (5) is anchored in the housing body (2).

20. Ball valve according to one of claims 1 to 19, characterized in that a metal enforcement (6a) is arranged on the resilient inlay (6).

21. Ball valve according to one of claims 1 to 20, characterized in that the pressure screw (11) or a respective sleeve acts against the resilient inlay (6) via o-rings (17) or via a resilient material (17a) against the plastic lining (5) to seal between the plastic lining (5) and the ball (3) and/or the control shaft (4) against the atmosphere.

## Revendications

1. Robinet à tournant sphérique comprenant un boîtier (1) et une pièce de rechange de robinet à tournant sphérique (2, 3, 4, 5, 6) apte à s'insérer dans le boîtier (1), dans lequel la pièce de rechange de robinet à tournant sphérique (2, 3, 4, 5, 6) présente un élément de blocage (3, 4), un revêtement (5) en matière synthétique et des pièces rapportées élastiques (6), dans lequel l'élément de blocage (3, 4) monté en rotation dans le revêtement (5) présente une bille (3) comprenant un arbre de commutation (4), la bille (3) possède un passage (3b) et le revêtement (5), qui sert en même temps de joint étanche par rapport à l'élément de blocage (3, 4), enferme en position adjacente la surface périphérique de la bille (3) et en partie l'arbre de commutation (4) et est pressé à l'aide des pièces rapportées élastiques (6) contre la bille (3) dans les zones d'étanchéité, dans lequel en outre le revêtement (5) entoure les pièces rapportées élastiques (6) de telle sorte qu'elles sont disposées à l'extérieur de la zone du milieu et de telle sorte que le revêtement (5) et le boîtier (1) présentent au moins une ouverture d'alimentation et d'évacuation (1b, 1c), caractérisé en ce que la pièce de rechange de robinet à tournant sphérique (2, 3, 4, 5, 6) présente en outre un corps de boîtier (2), dans lequel le revêtement (5) s'étend sans soudure en continu de la bride (5a) à la bride (5a) du revêtement (5) et les pièces rapportées élastiques (6) sont disposées entre le corps de boîtier (2) et le revêtement (5), et le revêtement (5) entoure le corps de boîtier (2) de telle sorte qu'il vient se disposer à l'extérieur de la zone du milieu, dans lequel la pièce de rechange de robinet à tournant sphérique (2, 3, 4, 5, 6) est insérée dans le boîtier (1) en position axiale dans la direction d'écoulement et des épaulements (2a) du corps de boîtier (2) sont soumis à un effort de tension entre des épaulements (1e) du boîtier (1) ou entre des bagues (16) reliées au boîtier (1) ou bien les brides (5a) du revêtement (5) sont soumises à un effort de tension entre les surfaces d'étanchéité (1g) du boîtier (1).

2. Robinet à tournant sphérique selon la revendication 1, caractérisé en ce que le corps de boîtier (2) est réalisé en deux parties et est constitué de préférence d'un matériau métallique.

3. Robinet à tournant sphérique selon la revendication 2, caractérisé en ce que l'arbre de commutation (4) de l'élément de blocage (3, 4) s'étend au-delà du diamètre du corps de boîtier (2).

4. Robinet à tournant sphérique selon la revendication 1, caractérisé en ce que le corps de boîtier (2) est réalisé en une seule pièce et est constitué de préférence d'une matière synthétique.

5. Robinet à tournant sphérique selon la revendication 4, caractérisé en ce que l'arbre de commutation (4) s'étend au maximum jusqu'au diamètre externe du corps de boîtier (2), un prolongement d'arbre de commutation (14) étant relié à l'arbre de commutation (4).

6. Robinet à tournant sphérique selon l'une quelconque des revendications 1 à 5, caractérisé en ce que l'effort de tension s'exerçant sur la pièce de rechange de robinet à tournant sphérique (2, 3, 4, 5, 6) a lieu entre deux bagues filetées (16) disposées dans le boîtier (1).

7. Robinet à tournant sphérique selon l'une quelconque des revendications 1 à 5, caractérisé en ce que l'effort de tension s'exerçant sur la pièce de rechange de robinet à tournant sphérique (2, 3, 4, 5, 6) a lieu entre un épaulement (1e) du boîtier et une bague filetée (16) disposée dans le boîtier (1) ou une bague vissée sur le boîtier (1).

8. Robinet à tournant sphérique selon l'une quelconque des revendications 1 à 5, caractérisé en ce que l'effort de tension s'exerçant sur un épaulement (2a) de la pièce de rechange de robinet à tournant sphérique (2, 3, 4, 5, 6) a lieu via une bague filetée (16) disposée dans le boîtier (1) ou via une bague vissée sur le boîtier (1), la pièce de rechange de robinet à tournant sphérique (2, 3, 4, 5, 6) agissant sur une bride (5a) contre la surface d'étanchéité (1g) du boîtier (1).

9. Robinet à tournant sphérique selon l'une quelconque des revendications 1 à 8, caractérisé en ce que les forces de tension s'exerçant dans la direction d'écoulement lors du bridage de la pièce de rechange de robinet à tournant sphérique (2, 3, 4, 5, 6) à l'intérieur du logement (1) et/ou d'un conduit tubulaire ou analogues, mettent en oeuvre l'étanchéité des brides (5a) par rapport aux surfaces d'étanchéité des contre-brides ou l'étanchéité des brides (5a) vis-à-vis des surfaces d'étanchéité des contre-brides et autour du passage (3b) de la bille entre le revêtement (5) et la bille (3).

10. Robinet à tournant sphérique selon l'une quelconque des revendications 1 à 9, caractérisé en ce que le montage et l'étanchéification de l'arbre de commutation (4) ont lieu dans la pièce de rechange de robinet à tournant sphérique (2, 3, 4, 5, 6).

11. Robinet à tournant sphérique selon l'une quelconque des revendications 1 à 9, caractérisé en ce que le montage de l'élément de blocage (3, 4) a lieu aussi bien dans la pièce de rechange de robinet à tournant sphérique (2, 3, 4, 5, 6) que dans le boîtier (1) et l'étanchéité vis-à-vis de l'atmosphère a lieu sur l'arbre de commutation (4), dans le boîtier (1) et/ou dans la pièce de rechange de robinet à tournant sphérique (2, 3, 4, 5, 6).

12. Robinet à tournant sphérique selon l'une quelconque des revendications 4 à 11, caractérisé en ce que le corps de boîtier (2) en une seule pièce est constitué d'une matière synthétique et est appliqué sur le revêtement (5) par compression ou par injection, dans lequel les pièces rapportées élastiques (6) disposées sur le revêtement (5) et, pour autant qu'il soit présent, un élément de pression (10) adjacent à ces dernières sont incorporés de manière conjointe aussi loin qu'il le faut dans le corps de boîtier (2).

13. Robinet à tournant sphérique selon l'une quelconque des revendications 1 à 12, caractérisé en ce que la pièce de rechange de robinet à tournant sphérique (2, 3, 4, 5, 6) forme une unité échangeable regroupée via le revêtement (5) qui est constitué en particulier d'une matière synthétique fluorée.

14. Robinet à tournant sphérique selon l'une quelconque des revendications 1 à 13, caractérisé en ce que la longueur de la pièce de rechange de robinet à tournant sphérique (2, 3, 4, 5, 6) de la bride (5a) à la bride (5a) est supérieure à la longueur du boîtier (1) d'une armature compacte ou en ce que la longueur de la pièce de rechange de robinet à tournant sphérique (2, 3, 4, 5, 6) de la bride (5a) à la bride (5a) présente une surmesure par rapport à la longueur entre les surfaces d'étanchéité (1g) d'un évidement (1d) pour la formation des épaulements de boîtiers (1e) par rapport à la longueur de l'évidement (1d).

15. Robinet à tournant sphérique selon l'une quelconque des revendications 4 à 14, caractérisé en ce que la pièce de rechange de robinet à tournant sphérique (2, 3, 4, 5, 6) est insérée dans un boîtier (1) en une seule pièce comprenant un évidement (19) aboutissant dans l'alésage central (18) du boîtier (1).

16. Robinet à tournant sphérique selon l'une quelconque des revendications 1 à 15, caractérisé en ce que la bille (3) présente au moins en partie un espace creux (3c) entre la paroi de la surface de la bille (3) et la paroi du passage (3b) de la bille (3), qui peut s'étendre jusque dans l'arbre de commutation (4) et/ou dans les tourillons inférieurs (3a).

17. Robinet à tournant sphérique selon l'une quelconque des revendications 1 à 16, caractérisé en ce que le boîtier (1) est constitué d'un matériau métallique, d'une matière synthétique ou d'une matière synthétique comprenant un renforcement métallique.

18. Robinet à tournant sphérique selon l'une quelconque des revendications 1 à 17, caractérisé en ce qu'une enveloppe métallique est disposée sur le diamètre externe ou dans la zone du diamètre externe du corps de boîtier (2) en matière synthétique et/ou une pièce rapportée métallique est disposée dans le boîtier (1) en matière synthétique et dans la zone du diamètre interne du boîtier (1).

19. Robinet à tournant sphérique selon l'une quelconque des revendications 1 à 18, caractérisé en ce que le revêtement (5) est ancré dans le corps de boîtier (2).

20. Robinet à tournant sphérique selon l'une quelconque des revendications 1 à 19, caractérisé en ce qu'un renforcement métallique (6a) est disposé contre la pièce rapportée élastique (6).

21. Robinet à tournant sphérique selon l'une quelconque des revendications 1 à 20, caractérisé en ce qu'une vis de serrage (11) ou un manchon correspondant agit sur le revêtement (5) via la pièce rapportée élastique (6), via des joints toriques (17) ou via un matériau élastique (17a), et l'étanchéité entre le revêtement (5) et la bille (3) et/ou l'arbre de commutation (4) s'exerce vis-à-vis de l'atmosphère.
